**Europäisches Patentamt**

**European Patent Office**

**Office européen des brevets**

(19)

(11) Veröffentlichungsnummer : **0 141 907
B1**

(12) **EUROPÄISCHE PATENTSCHRIFT**

(45) Veröffentlichungstag der Patentschrift :
11.11.87

(51) Int. Cl.⁴ : **C 12 C   1/02, B 03 B   5/56**

(21) Anmeldenummer : **84108588.9**

(22) Anmeldetag : **20.07.84**

(54) Vorrichtung zum Waschen und zumindest teilweisen Weichen von Braugetreide.

(30) Priorität : **22.07.83 DE 3326431**

(43) Veröffentlichungstag der Anmeldung :
**22.05.85 Patentblatt 85/21**

(45) Bekanntmachung des Hinweises auf die Patenterteilung : **11.11.87 Patentblatt 87/46**

(84) Benannte Vertragsstaaten :
**AT BE FR GB NL**

(56) Entgegenhaltungen :
**DE-C-    34 402
DE-C-    79 723
FR-A- 2 395 072
GB-A-    219 240
US-A- 1 698 442
US-A- 2 047 202**

(73) Patentinhaber : **Friedrich Weissheimer Malzfabrik
Kirchstrasse 31 Postfach 620
D-5470 Andernach (DE)**

(72) Erfinder : **Sarx, Hans Georg, Dipl. Braumeister
Felster 56
D-5470 Andernach (DE)**

(74) Vertreter : **Bauer, Wulf, Dr.
Wolfgang-Müller-Strasse 12
D-5000 Köln 51 (Marienburg) (DE)**

EP 0 141 907 B1

## Beschreibung

Die Erfindung bezieht sich auf eine Vorrichtung zum Waschen und insbesondere teilweisen Weichen von Braugetreide nach dem Oberbegriff des Patentanspruchs 1 sowie auf eine Vorrichtung zum Waschen, Weichen und Keimen von Braugetreide mit einer derartigen Vorrichtung zum Waschen und zumindest teilweisen Weichen.

Die Vorrichtung der eingangs genannten Art ist aus der DE-PS 34 402 bekannt, bei der der Zylindermantel aus einem Siebblech gefertigt ist und in eine mit Wasser gefüllte Wanne eintaucht. An seinen Stirnwänden ist der Zylindermantel offen, so daß er in Axialrichtung von Wasser, das sich im Bottich befindet, durchströmt werden kann. Der Einlaß der Gerste erfolgt nicht direkt in den Zylindermantel, sondern zunächst in eine Förderschraube, die die zu reinigende Gerste in den Innenraum des Zylindermantels fördert. Die Austragsvorrichtung für die gereinigte und zumindest teilweise geweichte Gerste besteht aus Siebblechen, die parallel zur Trommelachse an der Innenwand des Zylindermantels befestigt sind und die Gerstenkörner auf eine längere Förderschnecke schaufeln, die diese aus dem Innenraum des Zylindermantels und über ein schräggestelltes Siebblech zu einem separaten Auslaß fördert.

Bei dieser vorbekannten Vorrichtung ist nicht zu vermeiden, daß ein gewisser Teil des Braugetreides in den Bottich gelangt, dort verbleibt und während einer Reinigung entfernt werden muß. Weiterhin ist der Wasserverbrauch relativ hoch, da ein Teil des Wassers direkt am Boden des Bottichs entlang zum Auslauf für Wasser fließen kann. Schließlich bewirkt die offene Anordnung des sich im Bottich drehenden Zylindermantels einen Wasserverlust durch Spritzen. Bei den jeweils als Förderschraube ausgebildeten Vorrichtungen für den Eintrag und Austrag von Braugetreide bewegt sich eine Förderschnecke gegenüber einer ortsfesten, teilzylindrischen Wanne. Dadurch treten zwangsweise Spalte zwischen der Schnecke und der Wanne auf. Ein Mälzen soll jedoch ohne Beschädigung des Korns des Braugetreides durchgeführt werden, deshalb ist sorgfältig darauf zu achten, daß in die Spalte zwischen Schnecke und der ortsfesten Wanne keine Körner gelangen können. Dies macht einen hohen mechanischen Aufwand notwendig, die Schnecken müssen präzise gelagert werden, die Wanne muß auf ihrer gesamten Länge mechanisch sehr sorgfältig ausgeführt sein. Dabei treten jedoch immer Probleme an den Stellen auf, an denen die Anschmiegung des Behälters an die zwangsweise runde Schnecke beginnt. Zusammen mit den Förderschrauben ist die vorbekannte Vorrichtung mehr als doppelt so lang wie die Axiallänge des Zylindermantels.

Ausgehend von dieser vorbekannten Vorrichtung ist es Aufgabe der Erfindung, die Nachteile dieser Reinigungs- und Weichvorrichtung zu vermeiden und die bekannte Vorrichtung dahingehend zu verbessern, daß mechanisch wesentlich geringere Anforderungen an die Vorrichtung gestellt werden, was sich in einem geringeren Herstellungs- und Wartungsaufwand niederschlägt, daß die Vorrichtung axial relativ kurz gebaut werden kann und eine Beschädigung der Körner weitgehend ausgeschlossen ist.

Diese Aufgabe wird ausgehend von der vorbekannten Vorrichtung durch eine Vorrichtung mit den Merkmalen des Kennzeichnungsteils des Patentanspruchs 1 gelöst.

Aus der DE-PS 79 723 ist zwar schon eine Vorrichtung zum Waschen und zumindest teilweisen Weichen von Braugetreide bekannt, die eine allseitig wasserdicht geschlossene Trommel aufweist, diese ist aber nicht für ein kontinuierliches Arbeiten, sondern für den Chargenbetrieb ausgelegt. Insofern stellen sich im Gegensatz zur Vorrichtung der eingangs genannten Art keine Probleme hinsichtlich einer Gleichbehandlung der einzelnen Körner untereinander, des Einfüllvorgangs von Gerste während des Trommelumlaufs und des Austragens der Gerste ebenfalls während des Trommelumlaufs. Insbesondere lehrt diese Patentschrift keinen eine Förderschraube bildenden und an der Innenwand der Trommel befestigten Steg.

Ein besonderer Vorzug der erfindungsgemäßen Vorrichtung liegt darin, daß eine Beschädigung oder Zerstörung einzelner Gerstenkörner praktisch ausgeschlossen ist. Die erfindungsgemäße Vorrichtung ist kompakt, ihre Gesamtlänge wird durch die Trommellänge bestimmt. Eine gegeneinander gerichtete Bewegung einzelner Teile findet nicht statt, so daß ein Zermahlen oder auch nur Beschädigen einzelner Gerstenkörner ausgeschlossen werden kann.

Ein besonderer Vorteil der erfindungsgemäßen Vorrichtung liegt schließlich in der guten Voraussetzung der Kombination dieser Vorrichtung mit einer Weich- und Keimvorrichtung. Hier hat sich der erreichbare, relativ hohe Wassergehalt als besonders vorteilhaft erwiesen. Bei Wassergehalten von etwa dreißig Prozent erfahren die Lebensvorgänge im Gerstenkorn bereits eine deutliche Steigerung (siehe Schuster/Weinfurtner/Narziß « Die Bierbrauerei, 1. Band, Die Technologie der Malzbereitung », 6. Auflage, Enke Verlag Stuttgart). Andererseits sind Keime, wenn überhaupt, noch nicht so weit ausgebildet, daß sie bei dem nachfolgenden Transport zu den Weich- und Keimvorrichtungen beschädigt oder zerstört werden könnten.

Demgemäß liegt der Erfindung weiterhin die Aufgabe zugrunde, eine Weich- und Keimvorrichtung unter Verwendung der erfindungsgemäßen Trommel anzugeben. Nach dem Stand der Technik « Malzbereitung » erfolgt das weitere Weichen der Gerste nach Durchlaufen der Waschschnecke durch Aufsprühen von Wasser in Weich- und Keimkästen. Dabei wird die erforderliche, homogene und unterschiedslose Behandlung der ein-

zelnen vorgeweichten Gerstenkörner nicht erreicht. Die bekannten Weich- und Keimkästen werden relativ hoch mit vorgeweichter Gerste angefüllt, dies führt zu unterschiedlichen Weich- und Keimungsvorgängen je nach örtlicher Lage eines Gerstenkorns. Zwar ist in der « Malzbereitung » bereits darauf hingewiesen, daß man neuerdings die Weich- und Keimkästen lediglich bis zu einer Höhe von drei Metern mit Gerste fülle, aber auch bei diesen Füllhöhen treten bedingt durch unterschiedliche $CO_2$-Abfuhr, Wasserzugabe etc. deutliche Unterschiede zwischen einzelnen Gerstenkörnern je nach ihrer örtlichen Lage innerhalb der Schichtung auf, selbst wenn eine ständige Umwälzung stattfindet.

Um diese Nachteile der bekannten Weich- und Keimvorrichtungen zu vermeiden wird eine Vorrichtung zur Grünmalzbereitung vorgeschlagen, die zweistufig ausgeführt ist. Die erste Stufe wird durch die oben beschriebene Wasch- und Weichtrommel gebildet, die ausgangsseitig an die zweite Stufe, ein Weich- und Keimkasten, anschließbar ist. Letzterer ist als flacher, maximal zwei Meter hoch, vorzugsweise ein Meter hoch mit Gerste anfüllbarer Behälter ausgeführt, dessen Boden Öffnungen aufweist, durch die Wasser, aber keine Gerste hindurchtreten kann. Dieser Behälter ist in einem wasserdichten Bottich angeordnet, dessen Seitenwände höher sind als die Seitenwände des unten wasserdurchlässigen Behälters.

Auf Grund der relativ geringen Füllhöhe mit von der Trommel gereinigter und vorgeweichter Gerste wird eine wesentlich verbesserte Homogenität des Weich- und Keimvorgangs erreicht. Auf Grund des wasserdichten Bottichs kann die im Behälter befindliche Gerste vollständig geflutet werden, wodurch sichergestellt ist, daß jedes einzelne Gerstenkorn tatsächlich und für eine exakt vorbestimmte Zeit mit Wasser in Berührung gebracht wird. Bei dem bekannten Aufsprühen von Wasser entsprechend dem Stand der Technik ist eine derart gezielte und zeitlich bestimmte Wässerung nicht zu erreichen.

Insgesamt ermöglicht die erfindungsgemäße Vorrichtung zur Grünmalzbereitung eine intensivere und schonendere Reinigung der einzelnen Gerstenkörner sowie eine gleichmäßigere Weichung und Keimung unterschiedlos für die einzelnen Gerstenkörner.

Weiter Vorteile und Merkmale der Erfindung ergeben sich aus den übrigen Ansprüchen sowie der nun folgenden Beschreibung eines bevorzugten Ausführungsbeispiels, das unter Bezugnahme auf die Zeichnung im folgenden näher erläutert wird. In dieser zeigen :

Fig. 1 eine als Axialschnitt ausgeführte Seitenansicht einer Reinigungs- und Weichtrommel nach der Erfindung,

Fig. 2 ein Schnittbild entlang der Linie II-II in Figur 1, und

Fig. 3 eine schnittbildliche Darstellung einer kompletten Vorrichtung zur Grünmalzbereitung mit einer Trommel entsprechend Figur 1 und einem ebenfalls schnittbildlich gezeigten Weich- und Keimkasten.

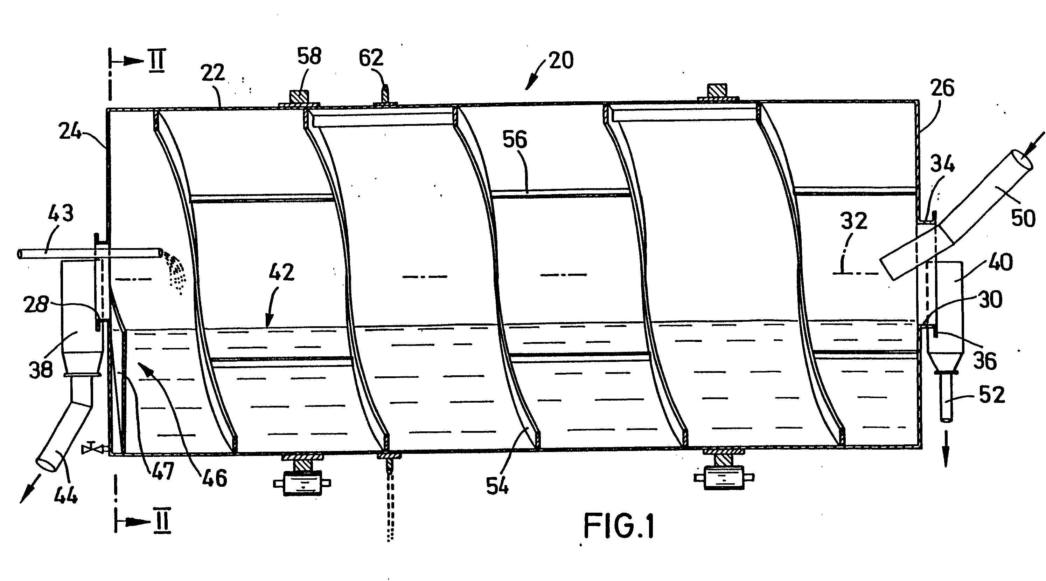

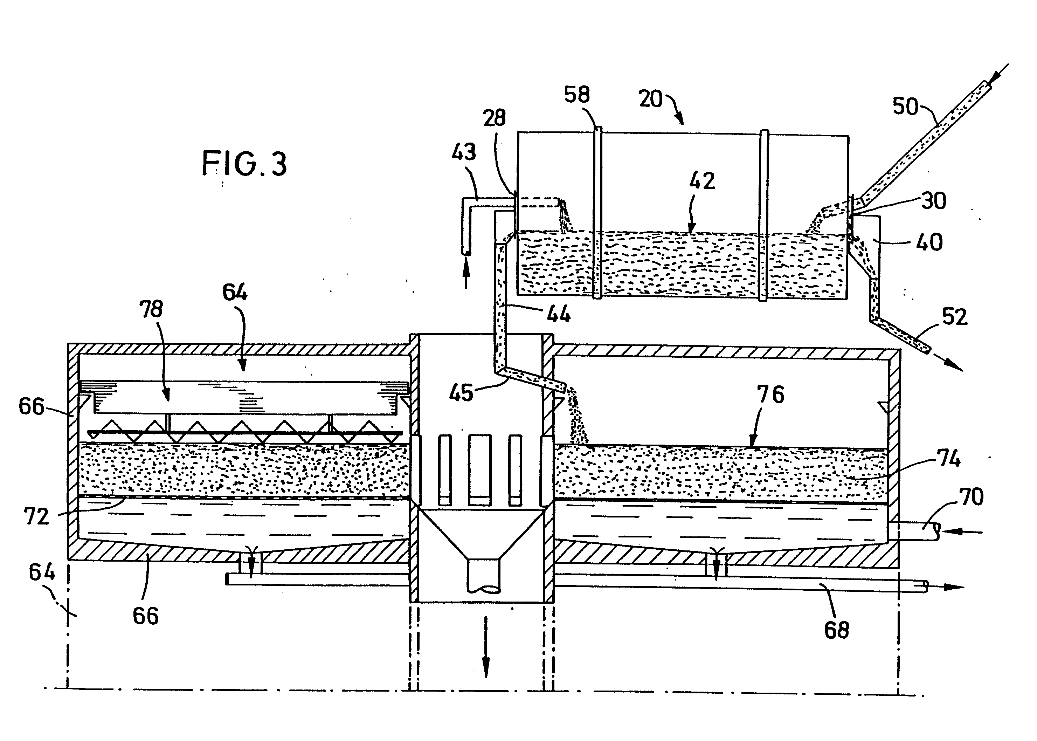

Die in den Figuren gezeigte Reinigungs- und Weichtrommel 20 setzt sich aus einem zylindrischen Mantel 22 und zwei diesen Mantel 22 seitlich abschließenden Stirnwänden 24, 26 zusammen. Die Trommel 20 bildet einen wasserdichten Behälter, der lediglich Öffnungen 28, 30 im Bereich der Stirnwände 24, 26 aufweist und über die Öffnungen 28, 30 zugänglich ist. Der Innendurchmesser der Trommel beträgt mehrere Meter, beispielsweise drei Meter, die Trommel ist etwa 2 1/2 mal länger als ihr Durchmesser beträgt. Die beiden Öffnungen 28, 30 befinden sich konzentrisch zur Trommelachse 32, sind kreisförmig und haben unterschiedliche Innendurchmesser : Die an der linken Stirnwand 24 befindliche Öffnung 28 hat einen Innendurchmesser von etwa einem Viertel des Durchmessers dieser Stirnwand 24 und ist kleiner als die Öffnung 30 der rechten Stirnwand, 26, deren Innendurchmesser etwa ein Drittel des Durchmessers dieser Stirnwand 26 beträgt. Beide Öffnungen 28, 30 werden durch einen kurzen, nach außen axial wegstehenden, die Öffnung 28, 30 begrenzenden Rohrstutzen 34 gebildet, an dem außen radial nach außen wegspringend ein Ablaufkragen 36 angesetzt ist. Stutzen 34 und Ablaufkragen 36 werden jeweils von einem Einlauftrichter 38, 40 von unten und seitlich umgriffen. Beim praktischen Betrieb wird die Trommel 20 bis zu einem Wasserspiegel 42 mit Wasser gefüllt, dieser liegt, wie die Figuren 1 und 3 zeigen, stets unterhalb der Öffnung 28, aber im Auslaufbereich der rechten Öffnung 30.

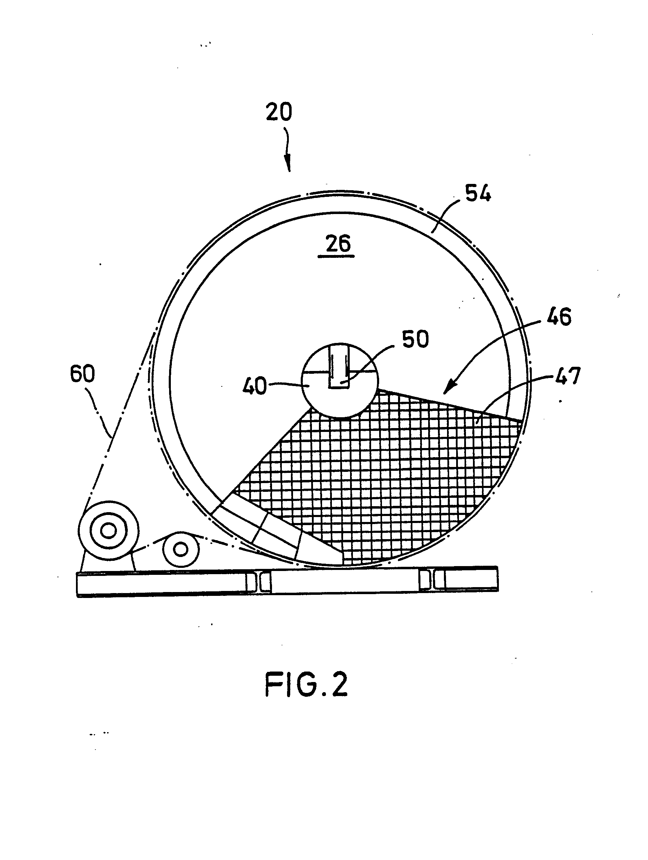

Durch die Öffnung 28 ragt ein Rohr für den Einlauf 43 von Wasser, weiterhin wird durch diese Öffnung 28 die gereinigte und teilweise geweichte Gerste ausgetragen, die durch den Einlauftrichter 38 in ein Verbindungsrohr 44 fällt. Der Austrag der Gerste erfolgt über eine als Austragspirale 46 ausgebildete Austragvorrichtung, die mit der linken Stirnwand 24 und dem angrenzenden Mantel 22 verbunden ist. Sie besteht aus drei Sektoren aus gelochtem Blech mit jeweils etwa 120° Sektorwinkel, von denen jedoch in den Fig. 1 und 2 jeweils nur ein Sektor 47 dargestellt ist. Diese Sektoren sind schraubenlinienförmig mit dem Mantel 22 verbunden und schräg zur Trommelachse 32 angestellt, wie Figur 1 zeigt. Sie erfassen gereinigte, im linken unteren Eckbereich der Trommel 20 befindliche Gerste und fördern sie im wesentlichen radial nach oben und durch die Öffnung 28, so daß die Gerste in den Einlauftrichter 38 fallen kann. Da die Sektoren gelocht sind, läuft durch sie während des Fördervorgangs das Wasser hindurch, so daß die Gerste ohne zusätzliches, äußeres Wasser ausgetragen wird.

Die soeben beschriebene Ausführung der Austragsvorrichtung 46 hat den Vorteil, daß die jeweils bei jeder Drehung eines Sektors 74 von diesem ergriffene und geförderte Menge an gereinigter Gerste abhängig ist vom Füllstand des linken Endbereichs (in Fig. 1) der Trommel 20 mit Gerstenkörnern. Je mehr Gerstenkörner den linken Endbereich erreichen, um so mehr Gerstenkörner werden auch mittels der Austragvorrichtung 46 durch die Öffnung 28 gefördert und umgekehrt. Die Austragsmenge ist somit proportional der in der Trommel nach links angeförderten Menge an Gerstenkörnern.

Grundsätzlich können auch andere Ausführungen einer Austragvorrichtung in der Trommel 20 verwendet werden. Beispielsweise können spiralförmig und axial verlaufende Lochbleche benutzt werden, die zunächst die Gerstenkörner nun radial fördern, jedoch in Nähe der Trommelachse 32 einen schrägen Verlauf haben, der eine axiale Förderung nach links bedingt.

Die rechte Öffnung 30 durchragt ein Rohr für den Einlaß 50 von zu reinigender Gerste. Aus der Öffnung 30 fließt beim praktischen Betrieb der Trommel 20 ständig Schmutzwasser in den Einlauftrichter 40, mitgeführt wird Schwimmgerste. Beides wird über ein Rohr 52 abgeführt, die Schwimmgerste wird später vom Schmutzwasser abgetrennt.

An der Innenwand des Mantels 22 der Trommel 20 befindet sich ein, der Förderung der Gerstenkörner dienender Steg 54, der im gezeigten Ausführungsbeispiel die Trommel in fünf Windungen schraubenlinienförmig durchläuft. Er ist starr und möglichst fugenlos mit dem Mantel 22 verbunden und hat eine Höhe, die unter einem Zehntel des Innendurchmessers des Mantels 22 liegt. Anstelle eines Steges 54 können auch zwei oder mehrere Stege vorgesehen sein, die eine zwei- oder mehrgängige Schraube ausbilden, dargestellt in Figur 1 ist eine eingängige Förderschraube. Benachbarte Windungen des Steges 54 werden durch axial verlaufende, ebenfalls am Mantel 22 starr befestigte Querstege 56 verbunden, die eine etwas geringere Höhe als der Steg 54 haben. Auf dem Umfang sind insgesamt pro Windung vier Querstege 56 angebracht, die Querstege 56 übernächster Windungsbereiche verlaufen jeweils auf einer gemeinsamen Mantellinie, wie Figur 1 zeigt.

Die Trommel 20 hat schließlich zwei Abrollringe 58, die jeweils auf zwei Walzen lagern und eine Drehung der Trommel 20 um ihre Trommelachse 32 ermöglichen. Der Antrieb dieser Drehbewegung erfolgt über eine Kette 60 (siehe Figur 2), die in einen Zahnkranz 62 greift, der an der Außenseite des Mantels 22 befestigt ist.

Beim praktischen Betrieb der Trommel 20 strömt durch den Wassereinlauf 43 Wasser in die Trommel 20, das die Trommel 20 axial durchströmt und an der Öffnung 30 wieder verläßt. Eine Niveauregulierung des Wasserspiegels, wie bei der bekannten Waschschnecke, ist nicht notwendig, da der Wasserspiegel 42 durch die Höhe der Öffnung 30 bestimmt wird. In Gegenrichtung zum Wasser wird über den Einlaß 50 für Gerste zu reinigende Gerste in die Trommel 20 geleitet. Diese fällt auf den Boden der sich mit beispielsweise eine Umdrehung pro Minute drehenden Trommel, wird durch den Steg 54 langsam axial nach links befördert und durch die Querstege 56 in Umfangsrichtung hochgefördert bis nach Erreichen einer gewissen Drehposition die Gerstenkörner wieder von den Querstegen 56 herunterrutschen und auf den Boden der Trommel 20 fallen. Die gereinigten Gerstenkörner werden dann, wie beschrieben, am linken Endbereich der Trommel 20 mittels der Austragsspirale ergriffen und ausgetragen.

Auf Grund der Abrollringe 58 ist die Trommel 20 im Bereich ihres Mantels 22 und nicht ihrer Stirnwände 24, 26 gelagert, letztere bleiben dadurch für die Öffnungen 28, 30 frei. Diese wiederum brauchen nicht nach außen hin abgedichtet zu werden, die Trommel 20 benötigt auf Grund ihrer Konstruktion keine Dichtungen wie die bekannte Waschschnecke.

In der Figur 3 ist eine Vorrichtung zur Grünmalzbereitung mit einer Trommel 20 gemäß den Figuren 1 und 2 gezeigt. Das den Auslaß 44 für Gerste (Ausweichrohr) verlassende, gereinigte und teilweise geweichte Gut fällt durch das Rohr 45 in einen ringförmigen Keimkasten 64. Eine Trommel 20 kann innerhalb weniger Stunden die zur Füllung eines Keimkastens 64 benötigte Menge an Keimgut reinigen und vorweichen, demgegenüber dauert der im Keimkasten 64 stattfindende Weich- und Keimvorgang einige Tage. Dementsprechend ist, wie in Figur 3 angedeutet, eine Trommel 20 für eine größere Anzahl von übereinander angeordneten Keimkästen 64 vorgesehen. Die Trommel 20 befindet sich dabei oberhalb der Keimkästen 64.

Jeder Keimkasten 64 besteht aus einem wasserdichten, ringförmigen Bottich 66, der an seiner tiefsten Stelle einen Wasserablauf 68 und in seiner äußeren Seitenwand einen Wasserzulauf 70 hat. In einer gewissen Höhe von beispielsweise einem Meter oberhalb des Bodens des Bottichs 66 ist ein mit Durchlaßöffnungen für Wasser oder Luft versehener, ringförmiger Hordenboden 72 waagrecht angeordnet, der zusammen mit den zylindrischen Innen- und Außenwänden des Bottichs 66 einen Behälter für das Keimgut 74 bildet, das etwa bis zu einer Höhe von einem Meter oberhalb des Hordenbodens 72 steht. Beim praktischen Betrieb wird der Keimkasten 64 zeitweise bis zu einem Wasserspiegel 76, der sich oberhalb der Füllhöhe für Keimgut 74 befindet, mit Wasser angefüllt. Nach erfolger Weichung und Keimung wird das Grünmalz durch den zentralen Innenschacht des Bottichs 66 nach unten zur Darre hin abgeführt.

Das Keimgut 74 wird in an sich bekannter Weise dadurch gelüftet, daß von unten durch den Hordenboden 72 temperierte Luft in das Keimgut 74 gedrückt wird, die das Keimgut 74 axial durchströmt und oben, oberhalb des Wasserspiegels 76 an einer (nicht dargestellten) Auslaßöffnung wieder abgeführt wird. Die hierzu notwendigen Belüftungseinrichtungen, ebenso wie eine Be- und Endlademaschine 78 sowie weitere Einzelheiten des Keimkastens 64 sind an sich bekannt, siehe « Die Keimanlagen der pneumatischen Mälzerei », Malzbearbeitung, so daß auf diese Einzelheiten hier nicht einzugehen ist.

Die beanspruchte, spezielle Ausbildung des Keimkastens 64 hat gegenüber bekannten Weich- und Keimvorrichtungen wie beispielsweise dem Optimälzer, folgende Vorteile :

a. Der Bottich 64 und der Hordenboden 72 bleiben ortsfest, müssen also nicht bewegt werden.

b. Die Füllhöhe beim Keimgut 74 liegt typischerweise bei einem Meter. Unter diesen Bedingungen kann die Belüftung homogener erfolgen, weil sich die Zusammensetzung der Luft bei Durchlaufen einer nur einen Meter hohen Schicht an Keimgut 74 praktisch nicht ändert. Zugleich ist die Abfuhr von $CO_2$ wesentlich günstiger.

c. Eine Abdichtung, verbunden mit verschleißenden Dichtelementen, ist nicht erforderlich.

d. Die Luft wird von unten nach oben und nicht von oben nach unten durch das Keimgut 74 gedrückt, so daß bei der Belüftung das Keimgut aufgelockert und nicht zusammengedrückt wird. Dabei erfolgt die Zufuhr der Luft durch seitliche Öffnungen im Außenmantel des Bottichs 66, wodurch der Innenraum der zylindrischen Innenwand freibleibt für den Malztransport. Der wesentlich größere Abstand zwischen Hordenboden 72 und Boden des Bottichs 66 sorgt für eine örtlich unabhängige Luftversorgung.

Im Gegensatz zu den bekannten Vorrichtungen wird eine gleichmäßigere Wasseraufnahme, eine optimale Sauerstoffversorgung und mithin eine Verbesserung der Homogenität des Malzes erzielt.

Beim praktischen Einsatz der erfindungsgemäßen Waschvorrichtung hat es sich gezeigt, daß die Waschvorrichtung nicht nur für die Malzbereitung, sondern grundsätzlich für die Reinigung von körnigem Material ausgesprochen vorteilhaft ist. Gedacht ist hier an die Reinigung von Getreide vor einem Mahlvorgang, an die Reinigung von Hafer- oder Maiskörnern vor einer Haferflocken- oder Maiskornflocken-Herstellung und dergleichen. Auch bei diesen Anwendungsbereichen machen sich die erfindungsgemäßen Vorzüge, nämlich sorgfältige Trennung von tauben und guten Körnern, sorgfältige und schonende Reinigung im Gegenstromverfahren bei geringem Wasserverbrauch und hohe, durchzusetzende Verarbeitungsmengen ebenfalls bemerkbar. Bei diesen zusätzlichen Anwendungsbereichen der Waschtrommel, für die eine Ausdehnung des Schutzes ausdrücklich offengelassen wird, wird jedoch zumeist eine geringe Wasseraufnahme der Körner bei der Reinigung angestrebt.

Dies kann durch einen schnelleren Durchlauf, also steiler angestellte Stege 54 oder größere Umdrehungsgeschwindigkeiten, um hier nur Beispiele zu nennen, erreicht werden.

Schließlich hat sich beim praktischen Einsatz der erfindungsgemäßen Waschtrommel als vorteilhaft herausgestellt, daß mit toxischen Mikroorganismen befallenes Getreide zufriedenstellend gereinigt werden kann. Derartige Mikroorganismen können Gifte, zum Beispiel Aflatoxine, absondern.

Im praktischen Betrieb ist die Füllhöhe des Keimkastens 64 kleiner als zwei Meter und liegt vorzugsweise bei einem Meter. Der Wasserspiegel 76 im Bottich 66 ist höher als diese Füllhöhe.

**Patentansprüche**

1. Vorrichtung zum Waschen und zumindest teilweisen Weichen von Braugetreide, insbesondere Gerste, bei der Malzbereitung, mit einem vorzugsweise waagrecht angeordneten, drehbaren, teilweise unterhalb eines Wasserspiegels (42) befindlichen Zylindermantel (22),

an dessen Innenwand radial nach innen vorspringend mindestens ein eine Förderschraube bildender Steg (54) befestigt ist,

an dessen einem Endbereich ein Einlaß (50) für Gerste und in Nähe hiervon ein im Bereich des Wasserspiegels befindlicher Auslaß für Wasser und zugleich Schwimmgerste angeordnet sind und

an dessen anderem Endbereich eine Austragsvorrichtung (46) für Gerste, die an der Innenwand befestigte Siebbleche aufweist, und ein Einlauf (43) für Wasser vorgesehen sind,

dadurch gekennzeichnet, daß der Zylindermantel (22) eine wasserdichte Wandung hat und über seitliche Stirnwände (24, 26), in denen konzentrische Öffnungen (28, 30) vorgesehen sind, zu einer wasserdichten Trommel geschlossen ist, daß die Öffnungen durch jeweils einen zylindrischen Stutzen (34), der axial nach außen vorspringt, begrenzt sind und einen äußeren Ablaufkragen (36) aufweisen, daß der Wasserspiegel sich oberhalb der den Auslauf für Wasser und Schwimmgerste bildenden Öffnung (30), jedoch unterhalb der den Auslaß für gereinigte Gerste bildenden Öffnung (28) befindet, und daß die Siebbleche der Austragsvorrichtung schräg zur Trommelachse (32) angestellt und auf einer Schraubenlinie mit dem Zylindermantel verbunden sind.

2. Vorrichtung nach Anspruch 1, dadurch gekennzeichnet, daß benachbarte Windungen des Steges (54) durch parallel zur Trommelachse (32) verlaufende, vorzugsweise eine etwas geringere radiale Höhe als der Steg (54) aufweisende und an der Innenwand des Mantels (22) befestigte Querstege (56) verbunden sind, wobei insbesondere vier Querstege (56) pro Windung des Stegs (54) vorgesehen sind und vorzugsweise die Querstege (56) einer Seite des Steges (54) gegenüber den Querstegen (56) an der anderen Seite derselben Windung des Steges (54) umfangmäßig versetzt angeordnet sind.

3. Vorrichtung nach Anspruch 1 oder 2, dadurch gekennzeichnet, daß der lichte Innendurchmesser der den Auslauf für Wasser und Schwimmgerste bildenden Öffnung (30) größer ist als der lichte Innendurchmesser der den Auslaß für gereinigte Gerste bildenden Öffnung (28).

4. Vorrichtung nach Anspruch 3, dadurch gekennzeichnet, daß die Stutzen (34) und Ablaufkragen (36) der Öffnungen (28, 30) von Einlauftrichtern (38, 40) umgriffen sind.

5. Vorrichtung nach einem der Ansprüche 1 bis 4, gekennzeichnet durch an der Außenwand des Mantels (22) angeordnete Abrollringe (58) sowie vorzugsweise einen ebenfalls an der Außenwand des Mantels (22) befestigten Zahnkranz (62) für den Drehantrieb der Trommel (20), wobei die Trommel (20) vorzugsweise mit einer Umdrehung pro Minute umläuft.

6. Vorrichtung nach einem der Ansprüche 1 bis 5, dadurch gekennzeichnet, daß der lichte Innendurchmesser der Trommel (20) einige Meter, beispielsweise zwei bis vier Meter, beträgt, daß vorzugsweise die Länge der Trommel (20) größer, insbesondere zweil bis viermal größer ist als ihr Innendurchmesser, und daß ein gemeinsamer Ablauf für Schwimmgerste und Auslaß für Schmutzwasser in Form der Öffnung (30) vorgesehen ist.

7. Vorrichtung nach einem der Ansprüche 1 bis 6, dadurch gekennzeichnet, daß die radiale Höhe der Stege (54) ein Zehntel bis ein Zwanzigstel des Innendurchmessers der Trommel (20) beträgt und daß vorzugsweise der Steg (54) fünf bis zehn Windungen, die gleich Steigung haben, aufweist.

8. Vorrichtung zur Grünmalzbereitung mit einer Wasch- und Weichvorrichtung nach einem der Ansprüche 1 bis 7, dadurch gekennzeichnet, daß der Trommel (20) ein Weich- und Keimkasten (64) nachgeschaltet ist, der einen vorzugsweise ringzylindrischen, wasserdichten Bottich (66) aufweist, in dem in einer Entfernung oberhalb des Bodens des Bottichs (66) ein Hordenboden (72) angeordnet ist, der Öffnungen aufweist, durch die Luft und Wasser, jedoch nicht Gerstenkörner hindurchtreten können, und daß der Bottich (66) einen Wasserablauf (68) und einen Wasserzulauf (70) aufweist.

9. Vorrichtung nach Anspruch 8, dadurch gekennzeichnet, daß die Trommel (20) sich oberhalb mehrerer, beispielsweise fünf bis zehn gleichartiger und vorzugsweise übereinander angeordneter Keimkästen (64) befindet.

## Claims

1. Device for washing and at least partially softening brewing grain, especially barley, during malt preparation, having a rotatable cylinder jacket (22) which is arranged preferably horizontally and is partially under a water level (42),
on the internal wall of which there is secured so that it projects radially inwards at least one ridge (54) forming a feed screw,
at the one end region of which there are arranged an inlet (50) for barley and, adjacent thereto, an outlet in the region of the water level for water and also tailings,
at the other end region of which there are provided an extractor device (46) for barley which has sieve plates secured to the internal wall, and an inlet (43) for water,
characterised in that the cylinder jacket (22) has a water-tight wall and is closed to form a water-tight drum by lateral end walls (24, 26) in which concentric apertures (28, 30) are provided, each aperture is delimited by a cylindrical connection piece (34) which projects axially outwards and has an outer discharge collar (36), the water level is above the aperture (30) forming the outlet for water and tailings but is below the aperture (28) forming the outlet for cleaned barley, and the sieve plates of the extractor device are adjusted at an angle to the axis (32) of the drum and are connected to the cylinder jacket on a helical line.

2. Device according to claim 1, characterised in that adjacent windings of the ridge (54) are connected by cross-pieces (56) which run parallel to the axis (32) of the drum, have preferably a slightly smaller radial height than the ridge (54) and are secured to the internal wall of the jacket (22), there being provided especially four cross-pieces (56) per winding of the ridge (54) and the cross-pieces (56) of one side of the ridge (54) preferably being arranged circumferentially offset with respect to the cross-pieces (56) on the other side of the same winding of the ridge (54).

3. Device according to claim 1 or 2, characterised in that the clear internal diameter of the aperture (30) forming the outlet for water and tailings is larger than the clear internal diameter of the aperture (28) forming the outlet for cleaned barley.

4. Device according to claim 3, characterised in that the connection pieces (34) and discharge collars (36) of the apertures (28, 30) are surrounded by inlet funnels (38, 40).

5. Device according to one of claims 1 to 4, characterised by coil rings (58) arranged on the external wall of the jacket (22) and preferably a toothed ring (62), also secured on the external wall of the jacket (22), for the rotary drive of the drum (20), the drum (20) rotating preferably at one revolution per minute.

6. Device according to one of claims 1 to 5, characterised in that the clear internal diameter of the drum (20) is a few metres, for example from two to four metres, preferably the length of the drum (20) is larger, especially from two to four times larger, than its internal diameter, and a common discharge for tailings and outlet for dirty water is provided in the form of the aperture (30).

7. Device according to one of claims 1 to 6, characterised in that the radial height of the ridges (54) is one tenth to one twentieth of the internal diameter of the drum (20) and preferably the ridge (54) has from five to ten windings that have the same gradient.

8. Device for preparing green malt having a washing and softening device according to one of claims 1 to 7, characterised in that there is connected downstream of the drum (20) a softening and germinating box (64) which has a preferably annular cylindrical water-tight vat (66) in which at a distance above the base of the vat (66) there is arranged a hurdle base (72) which has apertures through which air and water, but not barley grains, can pass, and the vat (66) has a water discharge (68) and a water supply (70).

9. Device according to claim 8, characterised in that the drum (20) is above a plurality, for example from five to ten, similar germinating boxes (64) preferably arranged one above another.

## Revendications

1. Appareil pour le lavage et au moins le trempage partiel de céréales pour la brasserie, en particulier d'orges, dans la préparation du malt, comprenant une enveloppe cylindrique (22) disposée de préférence horizontalement, rotative et située partiellement au-dessous d'un niveau d'eau (42),

à la paroi interne de laquelle est fixée au moins une nervure (54) faisant radialement saillie vers l'intérieur et formant une vis de transport,

à une zone d'extrémité de laquelle sont disposées une admission (50) pour l'orge et, à proximité de celle-ci, une sortie pour l'eau avec des grains d'orge flottants, sortie qui se trouve à proximité du niveau d'eau, et

à l'autre zone d'extrémité de laquelle sont prévus un dispositif de décharge (46) pour l'orge, présentant des tôles perforées fixées à la paroi interne, et une arrivée (43) pour l'eau,

caractérisé en ce que l'enveloppe cylindrique (22) possède une paroi étanche à l'eau et est pourvue de parois d'extrémité latérales (24, 26), dans lesquelles sont prévues des ouvertures concentriques (28, 30) et qui forment avec la paroi cylindrique un tambour étanche à l'eau, que les ouvertures sont délimitées chacune par une tubulure cylindrique (34) qui fait axialement saillie vers l'extérieur et possède un col d'écoulement extérieur (36), que le niveau d'eau est situé au-dessus de l'extrémité inférieure de l'ouverture (30) formant la sortie pour l'eau et les grains d'orge flottants, mais au-dessous de l'extrémité inférieure de l'ouverture (28) formant la sortie pour l'orge nettoyée, et que les tôles perforées du dispositif de décharge sont disposées en biais par rapport à l'axe (32) du tambour et sont reliées à l'enveloppe cylindrique suivant une ligne hélicoïdale.

2. Appareil selon la revendication 1, caractérisé en ce que des spires voisines de la nervure (54) sont reliées entre elles par des nervures transversales (56) fixées à la paroi interne de l'enveloppe (22), s'étendant parallèlement à l'axe (32) du tambour et ayant de préférence une hauteur radiale légèrement plus faible que celle de ladite nervure (54), les nervures transversales (56) étant en particulier au nombre de quatre par spire de ladite nervure (54) et les nervures transversales (56) étant de préférence décalées mutuellement, dans le sens de la circonférence, entre un côté de ladite nervure (54) et l'autre côté de la même spire de ladite nervure (54).

3. Appareil selon la revendication 1 ou 2, caractérisé en ce que le diamètre intérieur de l'ouverture (30) formant la sortie pour l'eau et les grains d'orge flottants est plus grand que le diamètre intérieur de l'ouverture (28) formant la sortie pour l'orge nettoyée.

4. Appareil selon la revendication 3, caractérisé en ce que les tubulures (34) et les cols d'écoulement (36) des ouvertures (28, 30) sont entourés par des entonnoirs d'écoulement (38, 40).

5. Appareil selon une des revendications 1 à 4, caractérisé par des anneaux de roulement (58) disposés sur la paroi externe de l'enveloppe (22) ainsi que, de préférence, par une couronne dentée (62), fixée également à la paroi externe de l'enveloppe (22) et servant à l'entraînement en rotation du tambour (20), la vitesse de rotation du tambour (20) étant de préférence d'un tour par minute.

6. Appareil selon une des revendications 1 à 5, caractérisé en ce que le diamètre intérieur du tambour (20) est de quelques mètres, par exemple de deux à quatre mètres, que la longueur du tambour (20) est de préférence supérieure et en particulier deux à quatre fois plus grande que le diamètre intérieur du tambour et qu'une sortie commune pour les grains d'orge flottants et pour l'eau sale est formée dans ladite ouverture (30) pour la sortie de l'eau et les grains d'orge flottants.

7. Appareil selon une des revendications 1 à 6, caractérisé en ce que la hauteur radiale de la nervure ou des nervures (54) est comprise entre un dixième et un vingtième du diamètre intérieur du tambour (20) et que cette nervure (54) présente de préférence cinq à dix spires ayant le même pas.

8. Appareillage pour la préparation de malt vert, comprenant un appareil de lavage et de trempage selon une des revendications 1 à 7, caractérisé en ce que le tambour (20) est suivi d'une case de trempage et de germination (64) qui présente une cuve (66) étanche à l'eau, de préférence de forme cylindrique annulaire, qui comporte, à une certaine hauteur au-dessus de son fond, un fond perforé (72) avec des ouvertures qui laissent passer l'air et l'eau mais qui empêchent le passage de grains d'orge, et que la cuve (66) présente une sortie d'eau (68) et une arrivée d'eau (70).

9. Appareillage selon la revendication 8, caractérisé en ce que le tambour (20) est installé au-dessus de plusieurs, par exemple au-dessus de cinq à dix cases de germination (64) semblables et qui sont de préférence superposées.

FIG.1

26 34 50 40 30 36 52 32 20 56 54 62 58 42 22 24 46 47 43 28 38 44

1

0 141 907

FIG.2

2

FIG.3

0 141 907